Europäisches Patentamt

European Patent Office

Office européen des brevets

(19)

(11) **EP 0 838 692 A1**

(12) **DEMANDE DE BREVET EUROPEEN**

(43) Date de publication:
**29.04.1998 Bulletin 1998/18**

(51) Int Cl.6: **G01S 5/00**, G01S 11/10,
G01S 1/02, G01C 21/16,
H04Q 7/38

(21) Numéro de dépôt: **97402417.6**

(22) Date de dépôt: **14.10.1997**

(84) Etats contractants désignés:
**AT BE CH DE DK ES FI FR GB GR IE IT LI LU MC
NL PT SE**
Etats d'extension désignés:
**AL LT LV RO SI**

(30) Priorité: **22.10.1996 FR 9612810**

(71) Demandeur: **SAGEM SA**
**75116 Paris (FR)**

(72) Inventeur: **Zibell, Laurent**
**75015 Paris (FR)**

(74) Mandataire: **Bloch, Gérard**
**2, square de l'Avenue du Bois**
**75116 Paris (FR)**

(54) **Terminal de téléphonie mobile cellulaire localisable**

(57) Le terminal de téléphonie mobile cellulaire comporte un émetteur-récepteur radio (1), pour communiquer avec des stations de base d'un réseau cellulaire, mesurant la vitesse Doppler des émissions provenant des stations et commandant en conséquence des circuits (2) d'estimation de la vitesse de déplacement du terminal, par composition des vitesses Doppler, et il est prévu des circuits de recalage (4, 5) pour recaler une centrale inertielle (10) fournissant au circuit radio (1) la position du terminal, par comparaison entre une vitesse de déplacement du terminal fournie par la centrale (10) et la vitesse estimée.

FIGURE UNIQUE

## Description

Un terminal mobile de téléphonie cellulaire permet à son utilisateur, dans ses déplacements, de s'affranchir de toute contrainte pour recevoir ou émettre par radio un appel téléphonique. Le terminal passe de proche en proche d'une cellule de couverture radio à une autre, adjacente, et il peut se raccorder à chaque fois à la station radio de base, assurant la couverture radio de la cellule considérée.

Cette liberté totale de mouvement présente cependant l'inconvénient d'exclure toute localisation précise d'une personne en détresse qui serait incapable d'indiquer sa position exacte, alors qu'un réseau téléphonique filaire permet cette localisation. Une station radio de base peut effectivement indiquer à l'exploitant du réseau cellulaire la présence d'un abonné déterminé dans sa cellule, mais sa surface est trop étendue pour que cette information soit utile.

Pour résoudre le problème évoqué ci-dessus, la demanderesse a songé à une localisation de terminal par triangulation par rapport à la station de base de la cellule et aux stations des cellules voisines dont les émissions peuvent être reçues par le terminal. Des mesures de distances aux stations par mesure du temps de trajet des ondes et/ou des mesures d'angles d'azimut des directions de réception par rapport aux stations, de positions connues, permettraient en théorie au terminal de déterminer sa position relative par rapport à ces positions connues et d'en déterminer sa position absolue, pour l'indiquer à la station de la cellule dans laquelle il se trouve. Cependant, en pratique, les réflexions ou diffractions sur les différents obstacles perturbant la propagation des ondes radio fausseraient grandement les mesures de la détermination de la direction de réception, tandis que des trajets multiples des ondes radio provoqueraient un étalement dans le temps de l'instant théorique de réception d'une onde issue d'une station et créeraient une incertitude bien trop élevée sur une mesure de distance qui serait effectuée à partir d'une mesure du temps de trajet de l'onde radio. Un récepteur de radiolocalisation par satellite, comme le GPS (Système de Positionnement Global), se heurterait au même problème. En ville, les immeubles de grande taille engendrent fréquemment de tels défauts et la solution de détermination de position par triangulation est de ce fait à exclure.

La demanderesse a aussi envisagé la navigation à l'estime, utilisée pour les véhicules, dans laquelle on mesure à tout instant la distance parcourue, au moyen d'un odomètre, et, par composition avec le cap relevé par un magnétomètre, on calcule, au fur et à mesure des déplacements, un vecteur de déplacement servant à recaler une position précédemment calculée. L'odomètre peut être remplacé par un radar Doppler ou une caméra qui, pointé vers le sol, mesure la vitesse de déplacement de l'image captée. On ne peut cependant imposer une telle contrainte permanente à un piéton porteur du terminal et les capteurs nécessaires évoqués ci-dessus nécessitent en pratique d'être montés sur un véhicule.

On peut encore songer à la navigation inertielle, couramment utilisée à bord des aéronefs, qui laisse une complète liberté de mouvement et d'attitude au porteur du terminal. Au moyen d'un accéléromètre trois axes et d'un gyroscope trois axes, une centrale inertielle calcule par intégration temporelle le vecteur vitesse instantanée du mobile concerné et une intégration temporelle supplémentaire en fournit le déplacement par rapport à une position initiale déterminée. Il faut cependant pouvoir effectuer cycliquement un recalage de la position fournie par la centrale, dont dépendent les calculs de position, afin de limiter l'erreur, qui sinon croîtrait indéfiniment au cours du temps.

C'est cette dernière technique de détermination de position que la demanderesse a choisie pour résoudre le problème de localisation de terminal de téléphonie, avec des moyens qui ne présentent pas les inconvénients ci-dessus et qui fournissent des indications de position présentant une erreur limitée.

A cet effet, l'invention concerne un terminal de téléphonie mobile cellulaire comportant des moyens émetteurs-récepteurs radio pour communiquer avec des stations de base d'un réseau cellulaire, caractérisé par le fait que les moyens radio sont agencés pour mesurer la vitesse Doppler des émissions provenant des stations et pour commander en conséquence des moyens d'estimation de la vitesse de déplacement du terminal, par composition des vitesses Doppler, et qu'il est prévu des moyens de recalage pour recaler une centrale inertielle destinée à fournir aux moyens radio la position du terminal, par comparaison entre une vitesse de déplacement du terminal fournie par la centrale et la vitesse estimée.

Ainsi, la vitesse Doppler par rapport à plusieurs stations, qui n'est pas affectée par les échos, fournit au moins une indication de l'ordre de grandeur du module de la vitesse réelle. En effet, bien que les directions de provenance des émissions des stations ne soient pas déterminées, puisqu'une telle détermination risquerait d'être faussée par des échos, le terminal dispose d'un ensemble de modules de vecteurs vitesse, correspondant respectivement aux diverses stations et indiquant les vitesses radiales d'éloignement par rapport à chaque station ou à son image, c'est-à-dire le dernier obstacle affectant la propagation de l'onde reçue par le terminal. La composition de ces modules permet alors d'obtenir le module d'un vecteur de vitesse estimée, à un facteur d'échelle près, lié au nombre des stations. Dans le cas idéal, avec simplement deux modules correspondant à deux vecteurs orthogonaux et en l'absence d'échos, la composition quadratique des modules fournit exactement le module de la vitesse réelle. Dans le cas général d'une pluralité de modules, le plus grand de ceux-ci fournit en outre une valeur minimale certaine du module de la vitesse réelle.

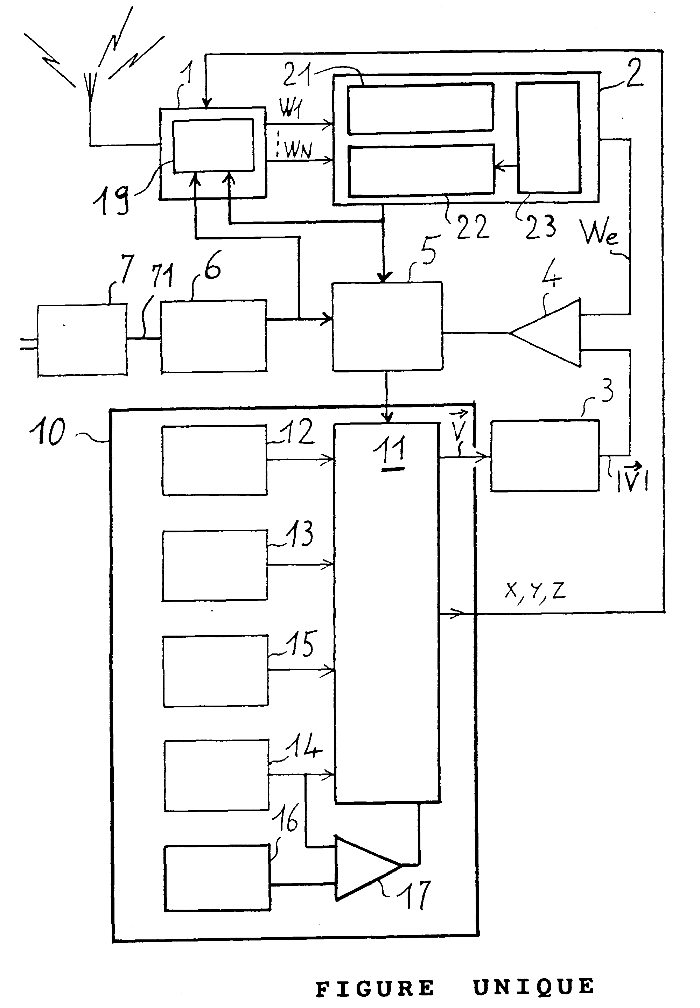

L'invention sera mieux comprise à l'aide de la description suivante d'une forme de réalisation préférée du terminal de l'invention, en référence à la figure unique annexée qui en est une représentation par blocs fonctionnels. On notera que, par souçi de clarté, la partie téléphonique classique n'a pas été représentée.

Le terminal représenté comporte un émetteur / récepteur radio 1, multicanaux, agencé pour mesurer la vitesse Doppler d'émissions, provenant de stations de radiotéléphonie cellulaire, et commandant un ensemble 2 d'estimation de la vitesse de déplacement du terminal à partir des mesures ci-dessus. L'ensemble 2 comporte un circuit 21 de calcul d'une valeur de vitesse maximale estimée du terminal, d'après l'écart entre au moins deux des vitesses Doppler. Un circuit 22 de l'ensemble 2 estime un modèle de biais Doppler de l'émetteur/récepteur 1, en fonction de mesures de température fournies par un capteur 23, ici intégré à l'ensemble 2.

La sortie de l'ensemble d'estimation 2 est reliée à une première entrée d'un comparateur 4 dont la seconde entrée est reliée à un circuit 3 fournissant le module d'un vecteur vitesse du terminal, provenant d'un bloc de calcul 11 d'une centrale inertielle 10 intégrée au terminal. La sortie du comparateur 4 alimente en données un filtre de Kalman 5 de recalage de la centrale inertielle 10. Dans cet exemple, le bloc de calcul 11 reçoit des données de mesure provenant d'un accéléromètre trois axes 12, d'un gyroscope trois axes 13, d'un magnétomètre 14 et d'un récepteur 15 de radiolocalisation par satellite, ici GPS. Une sortie du bloc de calcul 11, reliée à une partie émission du circuit 1, fournit des données de position X, Y, Z du terminal. Dans cet exemple, les mesures provenant du magnétomètre 14 subissent, avant exploitation, un test de validation par un comparateur 17 où elles sont comparées à des données d'une mémoire 16 représentant le champ magnétique terrestre.

Pour réaliser la centrale inertielle 10, on peut par exemple songer aux accéléromètres silicium et aux gyroscopes vibrants, éventuellement intégrés pour former un coeur inertiel complet de volume limité.

Il est ici prévu un capteur de détection de vitesse nulle, qui est constitué d'un connecteur 6 pour charger la batterie de raccordement à un chargeur externe fixe 7 d'une batterie du terminal, non représentée. Un connecteur d'extrémité, non représenté, d'un cordon de sortie 71 du chargeur 7 coopère avec le connecteur 6 pour charger la batterie. Le connecteur 6 comporte en outre un contact, non représenté, de détection de la présence du connecteur du cordon 71, contact qui fournit l'indication correspondante à un circuit 19 de réglage Doppler, appartenant au circuit 1, et au filtre de Kalman 5.

Le fonctionnement du terminal représenté va maintenant être expliqué.

Lorsque le porteur du terminal se déplace, le terminal passe d'une cellule de couverture radio à une autre et peut établir, de façon classique, une liaison radio bidirectionnelle avec la station de base correspondante, sur un canal déterminé. Le terminal peut cependant aussi recevoir, bien qu'à un niveau inférieur, des émissions de N - 1 autres stations de cellules, voisines, sur d'autres canaux. Le circuit radio 1 détermine cycliquement, pour chacune des réceptions dans chaque canal, la fréquence instantanée de l'onde reçue et, connaissant la vitesse de propagation des ondes radio dans l'air, il en déduit une valeur Wi de module de vitesse Doppler du terminal relative à chaque émission de station i (i = 1 à N).

L'ensemble d'estimation 2 effectue cycliquement une composition des valeurs estimées de vitesse Doppler pour déterminer une valeur estimée de la vitesse de déplacement du terminal. Dans cet exemple, il s'agit d'une composition quadratique des vitesses Doppler, c'est-à-dire qu'il est supposé ici que les directions de provenance des émissions des stations, éventuellement diffractées ou réfléchies, sont indépendantes entre elles et donc statistiquement perpendiculaires. Exprimé autrement, on peut considérer que l'inclinaison moyenne du vecteur vitesse sur la direction de provenance des ondes est de 45°. Le module de la vitesse estimée est de la forme :

$$We = (W1^2 + ..... + WN^2)^{0,5} / K$$

K étant un coefficient croissant avec N pour s'affranchir des variations de N et ainsi normer la valeur calculée. Il aurait pu cependant être prévu de ne retenir qu'un nombre fixe de stations, le coefficient K étant alors une constante.

La centrale inertielle 10 fournit de façon cyclique la position X, Y, Z établie à partir des données issues des capteurs 12 et 13 et confortées par les données de direction du nord magnétique du magnétomètre 14, qui est prévu dans cet exemple. Ces données de direction ne sont validées par le comparateur 17 que lorsque le vecteur qu'elles représentent correspond effectivement au seul champ magnétique terrestre. Les données mémorisées (16) représentent à cet effet un ellipsoïde sur lequel doit se trouver l'extrémité du vecteur champ magnétique terrestre, en l'absence de champ parasite superposé. Le comparateur 17 valide les données de direction lorsque l'extrémité du vecteur qu'elles représentent ne s'écarte de la surface de l'ellipsoïde que d'une distance inférieure à un seuil d'erreur tolérable. Il aurait pu n'être prévu qu'un sous-ensemble de l'ellipsoïde, par exemple une ou plusieurs ellipses. Le récepteur GPS 15 a pour fonction de fournir une position initiale de recalage au bloc de calcul 11, lorsqu'aucun obstacle ne risque de fausser la propagation des ondes provenant des satellites GPS.

La position X, Y, Z fournie par le bloc de calcul 11, émise par radio vers la station de la cellule où se trouve le terminal, est établie par double intégration temporelle des accélérations mesurées par l'accéléromètre 12 et en fonction de l'attitude du terminal déterminée par le gyroscope 13. Pour ce calcul de position, le bloc 11 détermine à titre intermédiaire, par la première intégration, les composantes, selon trois axes perpendiculaires, d'un vecteur vitesse V de déplacement du terminal. C'est sur le module de ce vecteur vitesse que va porter la correction de recalage établie par la mesure de vitesse Doppler. La position X, Y, Z obtenue par intégration de la vitesse $\vec{V}$ fournie par la centrale 10 est ainsi corrigée.

Pour ce faire, le comparateur 4 fournit au filtre de Kalman 5 des données de correction, plus précisément d'erreur, représentant l'écart entre le module de la vitesse We issue des mesures de vitesse Doppler et celui de la vitesse calculée par la centrale 10 et fournie à travers le circuit 3.

On rappellera qu'un filtre de Kalman, parfaitement connu de l'homme du métier, est un bloc de calcul qui permet de modéliser différents capteurs, c'est-à-dire en particulier de cerner progressivement, et de corriger au niveau des mesures fournies, l'erreur d'échelle et le biais de ceux-ci. En d'autres termes, la position déterminée par la centrale 10 est faussée, dans des proportions initialement inconnues et donc non corrigeables, par les divers défauts des capteurs 12 à 14. Par comparaison entre les résultats de calcul de la centrale 10 et des valeurs homologues provenant d'autres moyens (2), le filtre de Kalman 5 établit et affine au fil du temps un modèle des errreurs de chaque capteur 12 à 14, c'est-à-dire détermine la contribution de chaque type d'erreur dans l'erreur de calcul totale, pour tendre à rendre minimales les discordances relevées et ainsi recaler la centrale 10.

Le filtre de Kalman 5 corrige donc ici les mesures des capteurs 12 à 14 pour rendre minimale la séquence des erreurs de vitesse fournies cycliquement par le comparateur 4. On remarquera que les corrections successives du modèle de chaque capteur 12 à 14 permettent à chaque fois de déterminer les résidus d'erreurs antérieures et de les corriger, si bien qu'il n'y a pas accumulation des erreurs de calcul de position du bloc 11. Bien que la correction de vitesse ne porte que sur le module et non la direction, une succession de corrections du module vitesse pour une direction de déplacement qui évolue fournit en fait des corrections non colinéaires, c'est-à-dire un recalage selon les trois axes de référence de déplacement de la centrale 10.

Dans le cas où toutes les vitesses Doppler mesurées sont nulles, la vitesse estimée est donc nulle. Dans un cas particulier pour lequel des échos réaligneraient malencontreusement toutes les directions de réception et pour lequel le terminal se déplacerait en fait perpendiculairement à la direction unique de réception, l'estimation ci-dessus serait erronée. Cependant, la probabilité d'occurrence d'un tel cas décroît à mesure qu'augmente le nombre N de stations. En outre, un tel état disparaîtrait assez rapidement avec l'évolution de la direction de déplacement du terminal et une temporisation, en attente de confirmation par des mesures ultérieures, de la correction à effectuer permettrait d'éviter une correction intempestive. En outre, une correction intempestive effectuée peut toujours être corrigée par une mesure ultérieure et peut en outre être différée s'il apparaît que son amplitude est exceptionnelle.

Lorsque le terminal est mis en charge sur le chargeur 7 fixe, le contact de détection (6) commande le réglage Doppler pour tous les canaux de réception, c'est-à-dire que les fréquences alors reçues sont estimées être exemptes de dérive Doppler et sont mémorisées comme référence par le circuit 19. Le circuit 2 fournit donc une valeur estimée nulle. Il peut être prévu que la commande issue du contact 6 soit aussi appliquée au filtre de Kalman 5, pour lui indiquer qu'il s'agit en fait d'une valeur nulle qui est certaine et non pas simplement estimée. Dans la séquence des erreurs reçues, le filtre de Kalman 5 peut alors privilégier, c'est-à-dire mieux prendre en compte, les erreurs correspondant à une vitesse nulle avec certitude, dans sa détermination des corrections à apporter aux modèles, quitte à ne corriger que partiellement des erreurs dont la certitude que ce soient effectivement des erreurs n'existe pas, car elles auront été établies par estimation (2).

Comme capteur de vitesse nulle, on peut encore songer entre autres à une masselotte métallique mobile modifiant un champ ou un courant électrique lorsqu'elle se déplace.

La composition des modules de vitesse indiquée ci-dessus peut encore, dans d'autres exemples, être effectuée autrement que de façon quadratique. Il s'agit en effet d'une estimation, qui peut être affinée si l'on dispose d'informations supplémentaires. En particulier, dans une cellule, la connaissance des reliefs formant obstacle et de la disposition des autres stations permet de créer un modèle statistique des directions de réception au niveau du terminal et ainsi d'effectuer une composition des modules qui s'approche plus de la réalité.

Les circuits 21 à 23 permettent d'améliorer la précision des estimations de vitesse de l'ensemble 2, par élimination du biais en fréquence susceptible de fausser en réception le circuit radio 1. Un tel biais est dû à la dérive d'un oscillateur unique du circuit radio 19 servant à la détection de toutes les fréquences Doppler des divers canaux. Le principe de détection, et d'élimination, du biais ci-dessus repose sur le fait qu'un tel biais équivaut à un vecteur vitesse parasite, en mode commun qui se compose vectoriellement à chacun des vecteurs vitesse réels, c'est-à-dire dont le module s'ajoute ici, ou se retranche, au module de la composante de vitesse Doppler détectée. De ce fait, les mesures des vitesses Doppler, qui sont normalement a priori indépendantes les unes des autres car elles correspondent à des directions statistiquement indépendantes, présentent alors une certaine cohérence, ou dépendance, lorsqu'est présent le biais en mode commun. L'estimation de cette cohérence permet d'en déduire une estimation du biais et donc de le corriger. Dans le cas extrême de plusieurs (au moins deux) mesures Doppler toutes sensiblement égales, on peut estimer qu'il est fort probable que la vitesse réelle est en fait quasiment nulle et qu'il s'agit donc d'un biais de fréquence. La probabilité, évoquée plus haut, pour qu'il s'agisse en fait de directions de réception qui soient confondues est en effet très faible et temporaire et diminue avec le nombre de celles-ci.

Le circuit 21 estime ainsi une borne supérieure sur le module de la vitesse d'après l'écart entre au moins deux vitesses Doppler, ce qui élimine l'effet en mode commun de la dérive en fréquence ou biais de l'oscillateur ci-dessus.

Lorsqu'il y a trois canaux au moins, le circuit 21 effectue une composition, par exemple quadratique, des écarts entre chaque fréquence Doppler et toutes les autres pour fournir une estimation de la borne supérieure sur le module de la vitesse. Il en calcule aussi une vitesse la plus probable (directions indépendantes) pour, par différence entre celle-ci et les vitesses mesurées, en déduire une estimation du biais de fréquence.

Le circuit 22 effectue une corrélation entre la suite des biais ainsi déterminés et au moins un paramètre agissant sur l'amplitude du biais, ici la température (23). Il établit un modèle de biais servant à corriger les valeurs estimées We. Si d'autres variables doivent aussi être prises en compte, par exemple les fluctuations de la tension d'alimentation du terminal, un filtre de Kalman est bien approprié à cet effet. Dans cet exemple, une correction physique du biais intervient par une rétroaction d'étalonnage de l'ensemble 2 vers le circuit de réglage 19. De même, des informations de correction correspondantes sont fournies au filtre de Kalman 5 par l'ensemble 2, pour une correction logique aval. Dans le cas d'une vitesse nulle (égalité des modules de vitesse dans les divers canaux), ces informations sont alors traitées comme étant une mesure certaine, comme dans le cas du contact 6.

## Revendications

1. Terminal de téléphonie mobile cellulaire comportant des moyens émetteurs-récepteurs radio (1) pour communiquer avec des stations de base d'un réseau cellulaire, caractérisé par le fait que les moyens radio (1) sont agencés pour mesurer la vitesse Doppler des émissions provenant des stations et pour commander en conséquence des moyens (2) d'estimation de la vitesse de déplacement du terminal, par composition des vitesses Doppler, et qu'il est prévu des moyens de recalage (4, 5) pour recaler une centrale inertielle (10) destinée à fournir aux moyens radio (1) la position du terminal, par comparaison entre une vitesse de déplacement du terminal fournie par la centrale (10) et la vitesse estimée.

2. Terminal selon la revendication 1, dans lequel les moyens (2) d'estimation de la vitesse sont agencés pour effectuer une composition quadratique des vitesses Doppler.

3. Terminal selon l'une des revendications 1 et 2, dans lequel les moyens d'estimation de la vitesse (2) comportent des moyens (21) de calcul d'une valeur de borne supérieure sur le module de la vitesse d'après l'écart entre au moins deux vitesses Doppler.

4. Terminal selon l'une des revendications 1 à 3, dans lequel les moyens d'estimation de la vitesse comportent un capteur (6) de détection de vitesse nulle.

5. Terminal selon la revendication 4, dans lequel le capteur (6) est agencé pour détecter le raccordement du terminal à un chargeur fixe (7).

6. Terminal selon l'une des revendications 3 à 5, dans lequel les moyens (2) d'estimation de la vitesse sont agencés (22, 23) pour estimer un modèle de biais Doppler des moyens radio (1) en fonction de mesures de température fournies par un capteur (23).

7. Terminal selon l'une des revendications 3 à 6, dans lequel les moyens radio (1) comportent des moyens (19) de réglage Doppler commandés par les moyens d'estimation de vitesse (21, 22; 6).

8. Terminal selon l'une des revendications 1 à 7, dans lequel les moyens de recalage comportent un filtre de Kalman (5).

9. Terminal selon la revendication 8, dans lequel le filtre de Kalman (5) est agencé pour être commandé par les moyens d'estimation de vitesse (21, 22; 6).

10. Terminal selon l'une des revendications 1 à 9, dans lequel la centrale inertielle (10) comporte un magnétomètre (14).

11. Terminal selon la revendication 10, dans lequel il est prévu des moyens de comparaison (16, 17) des mesures du magnétomètre (14) et de données mémorisées, représentant le champ magnétique terrestre, pour valider lesdites mesures.

12. Terminal selon l'une des revendications 1 à 11, dans lequel il est prévu un récepteur de radiolocalisation par satellite (15) pour le recalage de la centrale inertielle (10).

**FIGURE UNIQUE**

**EP 0 838 692 A1**

Office européen
des brevets

**RAPPORT DE RECHERCHE EUROPEENNE**

Numéro de la demande

EP 97 40 2417

| DOCUMENTS CONSIDERES COMME PERTINENTS | | | |
|---|---|---|---|
| Categorie | Citation du document avec indication, en cas de besoin, des parties pertinentes | Revendication concernée | CLASSEMENT DE LA DEMANDE (Int.Cl.6) |
| Y<br>A | US 3 702 477 A (BROWN ROBERT G) 7 novembre 1972<br>* abrégé *<br>* colonne 4, ligne 19 - ligne 68 *<br>* figure 1 *<br>--- | 1,8-10,<br>12<br>2,3 | G01S5/00<br>G01S11/10<br>G01S1/02<br>G01C21/16<br>H04Q7/38 |
| Y | GB 2 264 837 A (KOKUSAI DENSHIN DENWA CO LTD) 8 septembre 1993<br>* abrégé *<br>* page 5, ligne 13 - ligne 23 *<br>* page 8, ligne 20 - page 9, ligne 1 *<br>* page 12, ligne 14 - ligne 22 *<br>* figure 4 *<br>* figure 5 *<br>--- | 1,8-10,<br>12 | |
| A | EP 0 715 150 A (XANAVI INFORMATICS CORP ;HITACHI LTD (JP)) 5 juin 1996<br>* abrégé *<br>* colonne 14, ligne 25 - colonne 17, ligne 56 *<br>* figure 2 *<br>--- | 1-3,8-11 | |
| A | US 5 551 059 A (HUTCHESON JONATHAN E ET AL) 27 août 1996<br>* abrégé *<br>* colonne 3, ligne 1 - colonne 4, ligne 6 *<br>* colonne 5, ligne 20 - ligne 24 *<br>* colonne 5, ligne 34 - ligne 42 *<br>* figure 1 *<br>* figure 3 *<br>----- | 1 | DOMAINES TECHNIQUES RECHERCHES (Int.Cl.6)<br><br>G01S<br>G01C<br>H04Q |

Le présent rapport a été établi pour toutes les revendications

| Lieu de la recherche | Date d'achèvement de la recherche | Examinateur |
|---|---|---|
| LA HAYE | 22 janvier 1998 | Lindhardt, U |